# EUROPEAN PATENT SPECIFICATION

(11) **EP 0 406 939 B1**
(45) Date of publication and mention of the grant of the patent: **30.08.1995**
(21) Application number: 90201680.7
(22) Date of filing: 25.06.1990
(51) Int. Cl.: A01C 5/06, A01C 23/02

(54) **Apparatus for closing the upper part of a trench provided in pasture-land or farmland**
Vorrichtung, um den oberen Teil einer Rinne im Boden zu schliessen
Appareil pour fermer la partie supérieure d'une rigole dans le sol, prairie ou champ

(30) Priority: 28.06.1989 NL 8901634
(43) Date of publication of application: 09.01.1991
(73) Proprietor: Veenhuis Machines B.V., NL-8102 HE Raalte (NL)
(72) Inventor: Smit, Berend Jan, NL-7475 AK Markelo (NL)
(74) Representative: Louet Feisser, Arnold

(56) References cited:
- EP-A- 0 117 745
- DE-A- 3 005 295
- US-A- 4 059 911
- US-A- 4 404 918

## Description

The present invention relates to an apparatus and method for at least partially closing the upper part of a narrow trench formed in the top layer of the ground, such as of pasture-land or farm-land.

US-A-4,404,918 discloses a seed planter vehicle comprising trench forming means in association with a pair of trench closing discs rotable around their shaft and arranged mutually facing and in transverse direction to the working direction at both sides of the trench. These trench closing wheels are used for prepared ground and in the disclosed configuration are not suitable for closing a trench in pasture-land.

The invention has for its object to provide an apparatus for closing trenches arranged in the ground wherewith the upper part of a trench arranged in a ground with a relatively great internal cohesion, such as pasture-land, can substantialle be fully closed. This object is achieved according to the invention in that the apparatus according to the invention comprises a pivotable frame for coupling to a device for cutting a trench in the ground, which frame comprises at least one pair of discs rotable around their substantially horizontal shaft, which pair of discs for closing the same trench are arranged mutually facing and in traverse direction to the working direction at such a distance that during working the discs are at both sides of the trench formed, and mutually diverge in the working direction, which is characterized in that the discs of which the main plain stands perpendicular to its respective shaft stands at such an angle with the working direction and are rotatably mounted to the frame whereby the distance in the working direction between the axis of rotation of the two discs is greater than the radius of a disc, such that during working the discs roll over the pasture land forming the ground and exert on the upper part of the pasture land a force directed transversely of the working direction and towards the other disc, which force closes the trench.

With the apparatus according to the invention it has surprisingly been found possible in simple manner to re-close the upper part of trenches formed in the top layer of pasture-land or farmland and filled with manure, so that a more or less unbroken ground surface is again obtained.

The position of each disc relative to the frame is preferably adjustable in different directions so that this position can be optimally adapted to the condition of the top layer of the pasture-land or farmland.

If in preference the pair of discs with the wheel shafts is fixed rotatably to a framework which is connected via a hinge to the frame and the framework is further connected to the frame via the hinge by interposing a link piece, the pair of discs can easily pass over obstacles, such as rocks, encountered on their path.

If more preferably the framework is provided with a closing member which, with the apparatus in the position of use, releases a feed hose for product and closes it in a position raised from the ground, the delivery of the product, namely manure, is closed off if the apparatus is raised out of its position of use, wherein the wheels are released from the ground. Wastage of the product, spillage and after-drip are thus prevented.

The invention will be further elucidated in the embodiments following hereinbelow with reference to the drawing, in which:
figure 1 shows a particular embodiment of the apparatus according to the invention used in a combination of a device for cutting trenches in the ground and a device for injecting manure into the ground;
figure 2 depicts the apparatus according to the invention shown in figure 1 in more detail and on enlarged scale;
figure 3 is a top view of the apparatus of figure 2;
figure 4 is a rear view of the apparatus of figure 2 in the direction of arrow IV, wherein only the rear disc is shown;
figure 5 shows a view as in figure 4, wherein the rear disc is shown in another position;
figure 6 is a perspective view of another embodiment of the apparatus; and
figure 7 shows a single work unit of the apparatus according to the invention consisting of a unit for cutting the trench, a unit for inserting the product and the pair of discs for closing the trench, in the raised position wherein the product feed is closed off.

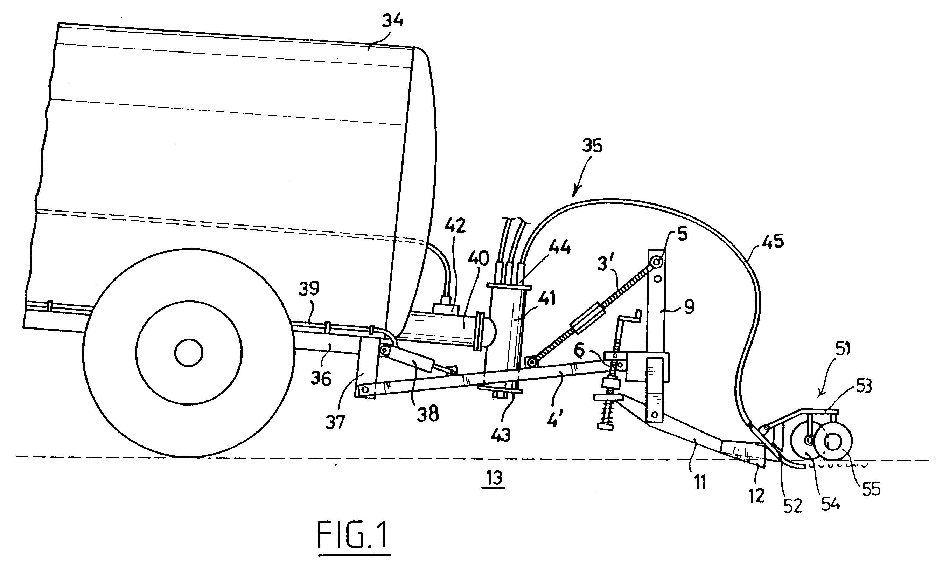

With the exception of the apparatus according to the invention designated with the reference numeral 51, the combined apparatus shown in figure 1 is extensively described in the non-prepublished Netherlands patent application no. 8900965 in the name of applicant. This description should be deemed as interpolated herein and is not repeated here.

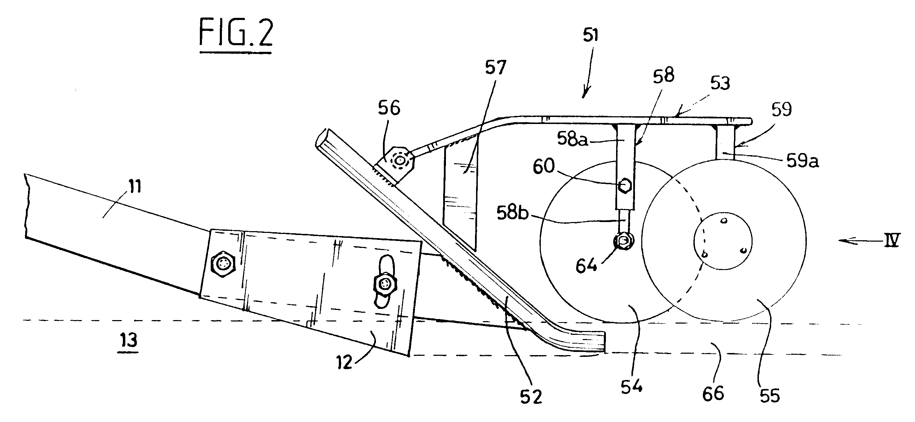

In figure 1 each hose 45 is connected to a manure injection tube 52 which runs inclined rearward and downward and which transposes at the outer end into a horizontal portion. The manure injection tube 52 is fixedly connected to a blade arm 11 of the device for cutting trenches in the ground 13, such as of pasture-land or farmland. The apparatus according to the invention indicated by 51 for closing the upper part of a trench comprises a frame 53 that is pivotally connected to the manure injection tube 52 and two discs 54 and 55 carried by the frame 53. This apparatus 51 is depicted in more detail in figures 2-5.

Figure 2 shows the rear part of the apparatus of figure 1 on enlarged scale. In figure 2 can be seen that a bracket 56 is welded onto the manure injection tube 52. The frame 53 is pivotally connected to this bracket 56. The frame is thereby freely movable within determined limits in vertical direction. The frame 53 is further provided with a downward extending support 57 which at the bottom can bear on the manure injection tube 52. This support serves to prevent the frame 53 with the discs 54 and 55 from swinging wholly downward when the blade arm 11 is raised.

The discs 54 and 55 are each mounted rotatably about their substantially horizontal shaft on the outer end of the substantially vertical frame parts 58 and 59 respectively. These parts 58 and 59, and thereby also the shafts of both discs 54 and 55, lie one behind the other as seen in the working direction of the apparatus. In transverse direction of the working direction the discs 54 and 55 lie at a mutual interval, wherein both discs are located on either side of the central longitudinal plane 53a of the apparatus extending in the working direction and lying in line with blade arm 11.

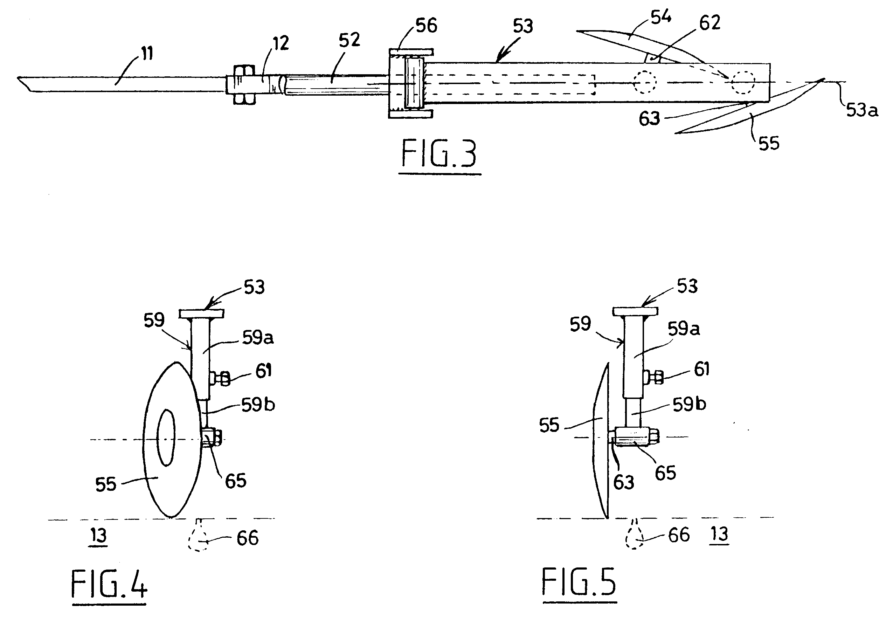

Both frame parts 58 and 59 each consist of two parts 58a, 58b and 59a, 59b which are respectively tubular and rod-like and are telescopically slidable into one another. Both tubular parts slidable into one another 58a, 58b and 59a, 59b are fixable relative to one another by means of the respective fixation bolts 60 and 61. Through this construction the height of each disc 54, 55 can be adjusted relative to the frame 53, while the angle of each disc can likewise be adjusted relative to the working direction of the apparatus. In addition the bearing shafts 62 and 63 of the discs 54 and 55 are slidable into the respective sleeves 64 and 65 arranged on the lower end of the frame parts 58 and 59 and are fixable therein. The position of each disc 54, 55 relative to the frame 53 is thereby likewise adjustable in the direction of the shaft of the disc. Due to the different adjustment possibilities the position of the discs can be adapted optimally to the condition of the ground 13 on which the apparatus is employed. The discs have to stand at an angle relative to the working direction such that, when during operation the discs 54, 55 roll over the ground 13 of farmland, each of both the discs exerts on the upper part of the ground 13 a force directed transversely of the working direction and towards the other disc. The discs will then generally assume approximately the position as indicated in figures 3 and 4, wherein the working direction is to the left in figure 3. The trench formed in the upper layer of the ground 13 and indicated in the figures with the reference numeral 66 will then be pressed closed at the top from both sides. During operation the discs roll freely over the upper part of the ground, wherein only the individual weight of the discs and the frame provides a downward force.

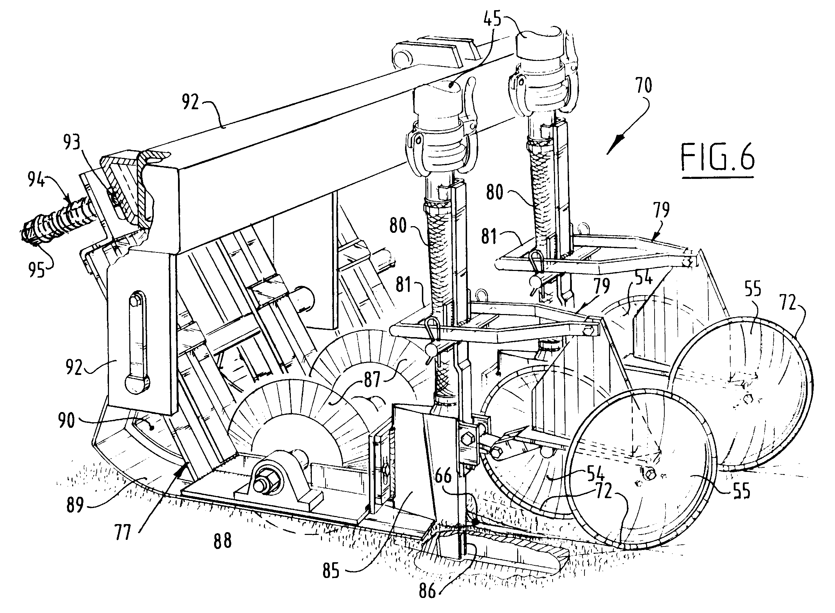

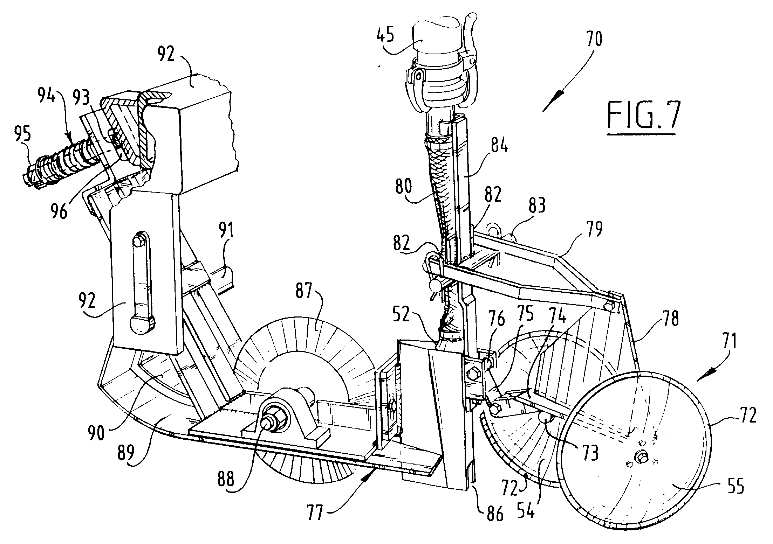

Figure 6 and 7 show another apparatus 70 according to the invention for closing trenches. The trench 66 is closed in each case using a pair 71 of discs 54 and 55 which are located on either side of this trench. The discs 54 and 55 have a flat and a concave surface wherein in this case the flat surface faces towards the trench, and are further provided along the periphery with a curled edge 72.

Both discs 54 and 55 each stand obliquely to the trench, wherein the distance to the trench is adjustable, since the disc shafts are arranged slidably and lockably in a sleeve 73. The sleeves are fixed to a framework 74 which is connected to the frame 77 via a link piece 75 and a hinge 76.

The framework 74 is provided with a plate 78 wherewith a bracket 79 is hingably connected. The bracket 79 opens a flexible hose 80 intended for the feed of product. In the raised position shown in figure 7 the body 81 of the bracket 79 presses the hose 80 against a counter plate 82 which is fixed to the post 84. Further attached to the post 84 is a rod 83 which forms a bearing for the bracket 79.

The post 84 and the hinge 76 are both fixed to the frame, in this case a member 85, with which product, for instance manure, is carried via a downstream opening 86 into the trench. This trench 66 is formed with a trench blade 87 that is fixed rotatably in cranks 88. The cranks 88 are fixed to two soles 89 and 90 bent upward in upstream direction. The soles extend to beside the member 85 for delivering product. The whole frame 77 is pivotable around a shaft 91 which is fixed in a boom 92. Attached to the boom is a pin 93 on which is guided a spring 94 which supports on a bolt 95. The pin 93 protrudes through a slotted hole 96. The spring 94 thus constrains the frame 77 to a horizontal operating position, wherein the trench blade 87 remains on or in the ground and both discs 54, 55 rest freely rotatably on the ground.

The invention is not limited to the embodiment of the apparatus according to the invention described herein. The frame for example may have a different form.

The apparatus according to the invention can of course also be coupled to other types of apparatus which form a trench in the ground.

The apparatus according to the invention is also suitable for use in a combination of an apparatus for cutting trenches in the ground and a seed drill as described in the above mentioned non-prepublished Netherlands patent application no. 8900965.

It will be apparent that with the apparatus described in the mentioned patent application multiple apparatus according to the invention can and will be used, one for each trench provided.

## Claims

1. Apparatus for at least partially closing the upper part of a trench formed in the ground (13), comprising a pivotable frame (53) for coupling to a device for cutting a trench in the ground (13), which frame (53) comprises at least one pair of discs (54,55) rotable around their substantially horizontal shaft (62,63), which pair of discs (54,55) for closing the same trench are arranged mutually facing and in traverse direction to the working direction at such a distance that during working the discs (54,55) are at both sides of the trench formed, and mutually diverge in the working direction, characterized in that the discs (54,55) of which the main plain stands perpendicular to its respective shaft (62,63) stands at such an angle with the working direction and are rotatably mounted to the frame (53) whereby the distance in the working direction between the axis of rotation (62,63) of the two discs (54,55) is greater than the radius of a disc (54,55), such that during working the discs (54,55) roll over the pasture land (13) forming the ground (13) and exert on the upper part of the pasture land (13) a force directed transversely of the working direction and towards the other disc (54,55), which force closes the trench.

2. Apparatus as claimed in claim 1, wherein the position of each disc (54, 55) relative to the frame (53) is adjustable in the direction of the shaft (62, 63) of the disc.

3. Apparatus as claimed in claim 1 or 2, wherein the angle of the main plane of each disc (54, 55) is adjustable relative to the working direction of the apparatus.

4. Apparatus as claimed in claims 1-3, wherein the height of each disc (54, 55) is adjustable relative to the frame (53).

5. Apparatus as claimed in claims 1-4, wherein the pair of discs (54, 55) with the wheel shafts (62, 63) is fixed rotatably to a frame which is connected via a hinge to the framework (11).

6. Apparatus as claimed in claim 5, wherein the frame is connected to the framework via the hinge by interpositioning a link piece.

7. Apparatus as claimed in claim 5 or 6, wherein the hinged frame is provided with a closing member cooperating with a feed hose for product, which closing member releases the feed hose when the apparatus is in the position of use, and closes the feed hose when the apparatus is in a position raised from the ground.

8. Method for at least partially closing the upper part of a trench formed in the ground (13), by means of a pivotable frame (53) for coupling to a device for cutting the trench in the ground (13), which frame (53) comprises at least one pair of discs (54,55) which rotate around their substantially horizontal shaft (62,63), which pair of discs (54,55) closes the same trench and are arranged mutually facing and in traverse direction to the working direction at such a distance that the discs (54,55) work at both sides of the trench formed, and mutually diverge in the working direction, characterized in that the discs (54,55) of which the main plain stands perpendicular to its respective shaft (62,63) stands at such an angle with the working direction and are rotatably mounted to the frame (53) whereby the distance in the working direction between the axis of rotation (62,63) of the two discs (54,55) is greater than the radius of a disc (54,55), such that the discs (54,55) roll over the pasture land (13) forming the ground (13) and exert on the upper part of the pasture land (13) a force directed transversely of the pasture land (13) a force directed transversely of the working direction and towards the other disc (54,55), which force closes the trench.

## Patentansprüche

1. Vorrichtung, um den oberen Teil einer Rinne im Boden (13) zu schließen, mit einem drehbaren Rahmen (53) zum Koppeln mit einer Einrichtung zum Schneiden einer Rinne in den Boden (13), wobei der Rahmen (53) wenigstens ein Paar von Scheiben (54, 55) umfaßt, die drehbar um ihre im wesentlichen horizontale Achse (62, 63) sind, wobei das Paar von Scheiben (54, 55) zum Schließen derselben Rinne wechselseitig gegenüberliegend und in transversaler Richtung zu der Arbeitsrichtung in einem derartigen Abstand angeordnet sind, daß während des Arbeitens die Scheiben (54, 55) an beiden Seiten der ausgebildeten Rinne sind, und wechselseitig in der Arbeitsrichtung divergieren, dadurch gekennzeichnet, daß die Scheiben (54, 55), deren Hauptebene senkrecht zu ihrer jeweiligen Achse (62, 63) steht, unter einem derartigen Winkel zu der Arbeitsrichtung stehen und drehbar an dem Rahmen (53) befestigt sind, wodurch der Abstand in der Arbeitsrichtung zwischen der Drehachse (62, 63) der zwei Scheiben (54, 55) größer als der Radius einer Scheibe (54, 55) ist, so daß die Scheiben (54, 55) über das den Boden (13) bildende Weideland (13) rollen und auf den oberen Teil des Weidelands (13) eine Kraft ausüben, die transversal zu der Arbeitsrichtung und in Richtung der anderen Scheibe (54, 55) gerichtet ist, wodurch die Rinne geschlossen wird.

2. Vorrichtung wie in Anspruch 1 beansprucht, worin die Position jeder Scheibe (54, 55) relativ zu dem Rahmen (53) in der Richtung der Achse (62, 63) der Scheibe einstellbar ist.

3. Vorrichtung wie beansprucht in Anspruch 1 oder 2, worin der Winkel der Hauptebene jeder Scheibe (54, 55) relativ zu der Arbeitsrichtung der Vorrichtung einstellbar ist.

4. Vorrichtung wie in Ansprüchen 1 bis 3 beansprucht, worin die Höhe jeder Scheibe (54, 55) relativ zu dem Rahmen (53) einstellbar ist.

5. Vorrichtung wie in Ansprüchen 1 bis 4 beansprucht, worin das Paar von Scheiben (54, 55) mit den Radachsen (62, 63) drehbar an einem Rahmen befestigt ist, der über ein Gelenk mit dem Rahmenwerk (11) verbunden ist.

6. Vorrichtung wie Anspruch 5 beansprucht, worin der Rahmen mit dem Rahmenwerk über das Gelenk durch Zwischenpositionieren eines Verbindungsstückes verbunden ist.

7. Vorrichtung wie in Anspruch 5 oder 6 beansprucht, worin der schwenkbare Rahmen mit einem Schließelement versehen ist, das mit einem Versorgungsschlauch für ein Produkt zusammenarbeitet, wobei das Schließelement den Versorgungsschlauch freigibt, wenn die Vorrichtung in der Betriebsposition ist, und den Versorgungsschlauch schließt, wenn die Vorrichtung in einer von dem Boden abgehobenen Position ist.

8. Verfahren zum wenigstens teilweise Schließen des oberen Teils einer Rinne im Boden (13), mittels eines drehbaren Rahmens (53) zum Koppeln mit einer Einrichtung zum Schneiden der Rinne in den Boden (13), wobei der Rahmen (53) wenigstens ein Paar von Scheiben (54, 55) umfaßt, die sich um ihre im wesentlichen horizontale Achse (62, 63) drehen, wobei das Paar von Scheiben (54, 55) dieselbe Rinne schließt und wechselseitig gegenüberliegend und in transversaler Richtung zu der Arbeitsrichtung in einem derartigen Abstand angeordnet ist, daß die Scheiben (54, 55) an beiden Seiten der ausgebildeten Rinne arbeiten, und wechselseitig in der Arbeitsrichtung divergieren, dadurch gekennzeichnet, daß die Scheiben (54, 55), deren Hauptebene senkrecht zu ihrer jeweiligen Achse (62, 63) steht, unter einem derartigen Winkel zu der Arbeitsrichtung stehen und drehbar an dem Rahmen (53) befestigt sind, wodurch der Abstand in der Arbeitsrichtung zwischen der Drehachse (62, 63) der zwei Scheiben (54, 55) größer als der Radius einer Scheibe (54, 55) ist, so daß die Scheiben (54, 55) über das den Boden (13) bildende Weideland (13) rollen und auf den oberen Teil des Weidelands (13) eine Kraft ausüben, die transversal zu der Arbeitsrichtung und in Richtung der anderen Scheibe (54, 55) gerichtet ist, wodurch die Rinne geschlossen wird.

## Revendications

1. Appareil pour fermer au moins partiellement la partie supérieure d'un sillon tracé dans le sol (13) et comprenant un cadre mobile en rotation (53) prévu d'être relié à un dispositif de coupe d'un sillon dans le sol (13), lequel cadre (53) comprend au moins une paire de disques (54,55) tournant autour de leurs axes (62,63) sensiblement horizontaux, laquelle paire de disques (54,55) de fermeture dudit sillon est disposée en vis-à-vis et à une distance selon une direction perpendiculaire à la direction de travail telle que, en cours d'opération, les disques (54,55) soient situés de part et d'autre du sillon formé, et de manière mutuellement divergente par rapport à la direction de travail, caractérisé en ce que ces disques (54,55), dont leurs plans principaux sont perpendiculaires par rapport à leurs axes correspondants (62,63), sont montés avec un angle prédéterminé par rapport à la direction de travail et sont montés en rotation par rapport au cadre (53) de façon à ce que la distance entre les axes de rotation (62,63) desdits disques (54,55) selon la direction de travail soit plus grande que le rayon d'un disque (54,55), ces montages étant tels que, en cours d'opération, ces disques (54,55) roulent sur le terrain agricole (13) formant le sol (13) et exercent sur la partie supérieure de ce sol agricole (13) une force orientée perpendiculairement à la direction de travail et en direction de l'autre disque (54,55) ce qui force la fermeture du sillon.

2. Appareil selon la revendication 1, caractérisé en ce que la position de chaque disque (54,55) par rapport au cadre (53) est réglable selon la direction des axes (62,63) du disque.

3. Appareil selon la revendication 1 ou 2, caractérisé en ce que l'angle du plan principal de chaque disque (54,55) est réglable par rapport à la direction de travail de l'appareil.

4. Appareil selon l'une des revendications 1 à 3, caractérisé en ce que la hauteur de chaque disque (54,55) est réglable par rapport au cadre (53)

5. Appareil selon l'une des revendications 1 à 4, caractérisé en ce que la paire de disques (54,55) et leurs axes (62,63) sont fixés en rotation à un cadre qui est relié au moyen d'une charnière à une structure (11).

6. Appareil selon la revendication 5, caractérisé en ce que le cadre est relié à la structure au moyen d'une charnière en interposant une pièce de liaison.

7. Appareil selon la revendication 5 ou 6, caractérisé en ce que le cadre lié par une charnière comprend un organe de fermeture coopérant avec un tuyau d'alimentation de produits, lequel organe de fermeture libère le tuyau d'alimentation lorsque l'appareil est en position de travail, et ferme le tuyau d'alimentation lorsque l'appeil est position relevée hors du sol.

8. Procédé pour fermer au moins partiellement la partie supérieure d'un sillon tracé dans le sol (13) au moyen d'un cadre mobile en rotation (53) prévu d'être relié à un dispositif de coupe d'un sillon dans le sol (13), lequel cadre (53) comprend au moins une paire de disques (54,55) tournant autour de leurs axes (62,63) sensiblement horizontaux, laquelle paire de disques (54,55) ferme ledit sillon, et est disposée en vis-à-vis et à une distance selon une direction perpendiculaire à la direction de travail telle que, en cours d'opération, les disques (54,55) agissent de part et d'autre du sillon formé et de manière mutuellement divergente par rapport à la direction de travail, caractérisé en ce que ces disques (54,55), dont leurs plans principaux sont perpendiculaires par rapport à leurs axes correspondants (62,63), sont montés avec un angle prédéterminé par rapport à la direction de travail et sont montés en rotation par rapport au cadre (53) de façon que la distance entre les axes de rotation (62,63) desdits disques (54,55) selon la direction de travail soit plus grande que le rayon d'un disque (54,55), ces montages étant tels que, en cours d'opération, ces disques (54,55) roulent sur le terrain agricole (13) formant le sol (13) et exercent sur la partie supérieure de ce sol agricole (13) une force orientée perpendiculairement à la direction de travail et en direction de l'autre disque (54,55) ce qui force la fermeture du sillon.
